# EUROPEAN PATENT APPLICATION

(11) **EP 1 900 852 A1**
(43) Date of publication of application: **19.03.2008**
(21) Application number: 07017607.8
(22) Date of filing: 07.09.2007
(51) Int. Cl.: C25B 11/04

(54) **Electrode for electrolysis, electrolytic process using the electrode, and electrolytic apparatus using them**

(30) Priority: 13.09.2006 JP 2006248251; 07.03.2007 JP 2007057303
(71) Applicant: Sanyo Electric Co., Ltd., Moriguchi-shi, Osaka-fu (JP)
(72) Inventor: Kitsuka, Kenta, Ora-gun Gunma 370-0815 (JP); Kaneda, Kazuhiro, Fukaya-shi Saitama 366-0824 (JP); Ikematsu, Mineo, Tsuchiura-shi Ibaraki 300-0013 (JP); Iseki, Masahiro, Kumagaya-shi Saitama 360-0803 (JP)
(74) Representative: Glawe, Delfs, Moll

(57) **Abstract**

An object of the present invention is to provide an electrode for electrolysis which is available by an easy fabrication process, can produce ozone water at high efficiency and also can produce hydrogen peroxide and OH radicals having a high oxidizing power by the electrolysis of water at a low current density; an electrolytic process using the electrode; and an electrolytic apparatus using them. The electrode for electrolysis according to the present invention has a substrate and a surface layer formed on the surface thereof, the surface layer being made of anatase type titanium oxide.

## Description

### BACKGROUND OF THE INVENTION

The present invention relates to an electrode for electrolysis to be used in electrolysis for industrial or consumer use, an electrolytic process using the electrode, and an electrolytic apparatus using them.

Ozone is typically a very oxidative substance so that water having ozone dissolved therein which is so-called ozone water is expected to be utilized for various cleaning and sterilizing treatments of water and sewerage systems, food, or the like and cleaning treatment in a fabrication process of semiconductor devices. As a process of producing ozone water, there is known a process of dissolving, in water, ozone produced by ultraviolet irradiation or electric discharge, or a process of producing ozone in water by electrolysis of water.

In Japanese Patent Laid-Open No. 11-269686 (Patent Document 1), there is disclosed a process of producing oxygen, ozone and hydrogen peroxide by electrolysis of water while using an electrode substance having a conductive diamond struture as an anode. In Japaneses Patent No. 3298431 (Patent Document 2), there is also disclosed a process of producing hydrogen peroxide and ozone by electrolyzing water or the like in a plurality of cells.

The above-described process of Patent Document 1 however has a problem that it uses diamond as an electrode substance, which raises the cost of the apparatus itself.

The above-described process of Patent Document 2, on the other hand, has also a problem that it is inferior in working efficiency because ozone and hydrogen peroxide must be produced by electrolysis in each of a plurality of cells so that an aqueous solution having ozone and hydrogen peroxide dissolved therein cannot be obtained by a single electrolytic operation.

### SUMMARY OF THE INVENTION

The present invention has been made to overcome the conventional technological problems. An object of the present invention is to provide an electrode for electrolysis which can be fabricated in an easy manner, can produce ozone at a high efficiency by the electrolysis of water at a low current density, and at the same time, can produce hydrogen peroxide and highly oxidative OH radicals; an electrolytic process using the electrode; and an electrolytic apparatus using the electrode and process.

In a first aspect of the present invention, there is provided an electrode for electrolysis comprising a substrate and a surface layer formed over the surface of the substrate, wherein the surface layer is made of an anatase type titanium oxide.

In a second aspect of the present invention, there is provided an electrode for electrolysis according to the above-described aspect of the present invention, wherein the surface layer has a thickness not greater than 1 mm.

In a third aspect of the present invention, there is provided an electrode for electrolysis according to the above-described aspects of the present invention, wherein the surface layer has a thickness from 200 nm to 600 nm.

In a fourth aspect of the present invention, there is provided an electrode for electrolysis according to the above-described aspects of the present invention, wherein the substrate is conductive at at least a contact surface thereof with the surface layer.

In a fifth aspect of the present invention, there is provided an electrolytic process, which comprises electrolyzing water or an electrolyte solution at a current density from 0.1 mA/cm² to 2000 mA/cm² while using any one of electrodes as described in the above-described aspects of the present invention as an anode.

In a sixth aspect of the present invention, there is provided an electrolytic process, wherein a substance produced by an electrolytic process as described in the above-described aspect of the present invention is at least one of ozone, hydrogen peroxide and another active oxygen species.

In a seventh aspect of the present invention, there is provided an electrolytic apparatus which comprises an electrode for electrolysis as described above in any one of the first to fourth aspects of the present invention and electrolyzes water or an electrolyte solution by an electrolytic process as described above in the fifth or sixth aspect of the present invention.

The electrode for electrolysis according to the first aspect of the present invention is equipped with a substrate and a surface layer formed over the surface of the substrate. The surface layer is a thin film so that it can perform electrolysis at a low current density. It is made of an anatase titanium oxide so that it can efficiently produce ozone. In addition, this titanium oxide aggregates during the formation of an anatase type crystal structure and allows the surface of the substrate to expose between crystals. Thus, a plurality of pores appear in the surface layer. Existence of these pores enables to realize the production of hydrogen peroxide without suppressing the production efficiency of ozone in an electrode reaction at an anode.

In the second aspect of the present invention, the thickness of the surface layer is defined to 1 mm or less. Since the surface layer can be formed as a thin film, electrons can transfer inside of the electrode via an impurity level in the surface layer or by Fowler-Nordheim tunneling. In the electrode reaction at an anode, an empty level near the bottom of a conductor which is on an energy level higher by about half of the band gap than a Fermi level can receive electrons from an electrolyte, making it possible to cause transfer of electrons on a higher energy level and thereby carry out electrolysis at a low current density. Ozone can therefore be produced efficiently.

According to the third aspect of the present invention, the thickness of the surface layer according to the above-described aspects of the present invention is defined to from 200 nm to 600 nm. Similar to the above-described aspects of the invention, the surface layer can be formed as a thin film so that electrons can transfer inside of the electrode via an impurity level in the surface layer or by Fowler-Nordheim tunneling. In the electrode reaction at an anode, an empty level near the bottom of a conductor which is on an energy level higher by about half of the band gap than a Fermi level can receive electrons from an electrolyte, making it possible to cause transfer of electrons on a higher energy level and thereby carry out electrolysis at a low current density. Ozone can therefore be produced efficiently.

In addition, since the thickness of the surface layer is defined to from 200 nm to 600 nm, ozone can be produced while keeping a ratio of charge contributing to ozone production to total charge applied to the electrode, that is, a current efficiency within a high range; and improvement in the productivity of electrodes and reduction in their production cost can be realized.

This makes it possible to realize an electrode for electrolysis having a still higher ozone production efficiency at a low production cost.

According to the fourth aspect of the present invention, in each of the above-described aspects of the present invention, the substrate is conductive at at least a contact surface thereof with the surface layer so that it can be allowed to function as an electrode as the electrode as described in the first to third aspects of the present invention without depending on the conductivity of the substrate itself.

According to the fifth aspect of the present invention, by electrolyzing water or an electrolyte solution at a current density from 0.1 mA/cm² to 2000 mA/cm² while using an electrode for electrolysis according to the above-described aspects of the present invention as an anode, at least one of ozone, hydrogen peroxide and another active oxygen species can be produced efficiently as in the sixth aspect of the present invention.

By the electrolysis of water or an electrolyte solution according to such an electrolytic process, plural oxidizing substances can be formed so that OH radicals having a relatively short life can be formed easily at a site where they are required. The oxidizing power of the OH radicals thus formed can be used effectively.

The electrolytic apparatus according to the seventh aspect of the present invention is equipped with an electrode for electrolysis as described in any one of the above-described first to fourth aspects of the present invention and electrolyzes water or an electrolyte solution by an electrolytic process according to the fifth or sixth aspect of the present invention. This facilitates production of at least one of ozone, hydrogen peroxide and another active oxygen species at a site where it is required.

### BRIEF DESCRIPTION OF THE DRAWINGS

FIG. 1 is a schematic cross-sectional view of an electrode for electrolysis according to the present invention (Example 1);
FIG. 2 is a flow chart of a fabrication process of the electrode for electrolysis according to the present invention (Example 1);
FIG. 3 is a schematic cross-sectional view of an electrode for electrolysis according to the present invention (Example 2);
FIG. 4 is a flow chart of a fabrication process of the electrode for electrolysis according to the present invention (Example 2);
FIG. 5 is an X-ray diffraction diagram of an electrode for electrolysis according to the present invention;
FIG. 6 is a schematic view of an electrolytic apparatus according to the present invention (Example 1, Example 2);
FIG. 7 shows ultraviolet absorption spectrum of an electrode for electrolysis formed at a firing temperature of 550°C as a function of current density (Example 1);
FIG. 8 shows ultraviolet absorption spectrum of an electrode for electrolysis formed at a firing temperature of 600°C as a function of current density (Example 1);
FIG. 9 shows ultraviolet absorption spectrum of an electrode for electrolysis formed at a firing temperature of 650°C as a function of current density (Example 1);
FIG. 10 shows ultraviolet absorption spectrum of an electrode for electrolysis (Example 2);
FIG. 11 is a cross-sectional plan view of an electrode for electrolysis (Example 3);
FIG. 12 is a schematic view of an electrolytic apparatus according to the present invention (Example 3);
FIG. 13 is a graph showing a current efficiency for ozone production as a function of a surface layer thickness of the electrode for electrolysis (Example 3); and
FIG. 14 is a graph showing a current efficiency for ozone production as a function of a surface layer thickness of the electrode for electrolysis (Example 3).

### DETAILED DESCRIPTION OF THE PREFERRED EMBODIMENT

Referring to some drawings, Examples 1 and 2 will hereinafter be described as preferred embodiments of the electrode for electrolysis according to the present invention.

### (Example 1)

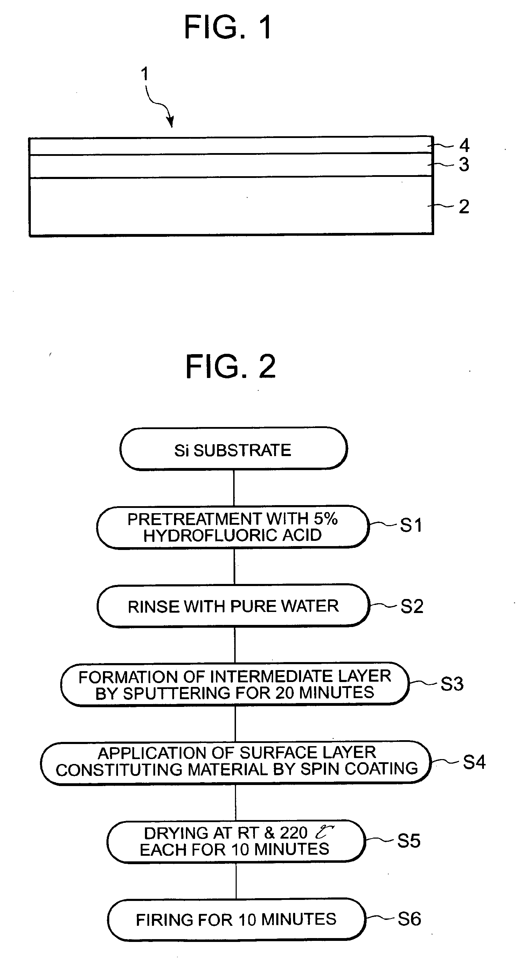

FIG. 1 is a cross-sectional plan view of an electrode 1 for electrolysis of Example 1 as one example of the electrode for electrolysis according to the present invention. The electrode 1 for electrolysis has, as shown in FIG. 1, a substrate 2, an intermediate layer 3 formed on the surface of the substrate 2, and a surface layer 4 formed on the surface of the intermediate layer 3.

In the present invention, the substrate 2 is made of a conductive material such as platinum (Pt), a valve metal such as titanium (Ti), tantalum (Ta), zirconium (Zr) or niobium (Nb), an alloy of two or more of these valve metals, or silicon. In particular, silicon having a planarized surface is employed for the substrate 2 to be used in the present Example.

The intermediate layer 3 is made of a metal resistant to oxidation such as platinum, gold (Au), a metal oxide having conductivity such as iridium oxide, palladium oxide or ruthenium oxide, or an oxide superconductor, or a metal having conductivity even after oxidation such as ruthenium (Ru), rhodium (Rh), palladium (Pd), iridium (Ir) or silver (Ag) included in platinum group elements. The metal oxide is not limited to an oxide that has constituted the intermediate layer 3 in advance but a metal oxide obtained by the oxidation as a result of hydrolysis may be embraced. In the present Example, the intermediate layer 3 is made of platinum.

When the substrate 2 is made of platinum, the surface of the substrate 2 is, needless to say, made of platinum so that it is not necessary to form the intermediate layer 3 particularly. The formation of the substrate 2 by using platinum however causes a rise in cost so that from the industrial viewpoint, it is preferred to use an inexpensive material for the substrate 2 and form, on the surface of the substrate 2, the intermediate layer 3 made of a noble metal or the like. The constitution of the substrate 2 is not limited to the above-described one insofar as the substrate 2 is made of a substance having no conductivity such as a glass plate and at least the contact surface of the substrate 2 with a surface layer 4 which will be described later is covered with a material having conductivity. This also makes it possible to suppress a rise in the cost incurred for materials used for forming the substrate 2.

The surface layer 4 is formed in layers over the surface of the substrate 2 with the intermediate layer 3. It is made of a dielectric substance and covers the intermediate layer 3 therewith. The surface layer 4 has a predetermined thickness. In the present Example, it is greater than 0 but not greater than 1 mm, preferably not greater than 2000 nm. The thickness of the surface layer 4 in the present Example will be described specifically later, but the thickness of it is more preferably less than 100 nm.

A fabrication process of the electrode for electrolysis according to the present invention will next be described with reference to the flow chart of FIG. 2. Silicon is employed as the substrate 2. In this case, silicon into which an impurity such as phosphorus (P) or boron (B) has been introduced to increase its conductivity is preferred. Silicon having a very flat surface is used. In the present Example, silicon is used as the material of the substrate 2 but a conductive material as described above is also usable.

First, in Step S1, the silicon substrate 2 is pre-treated with 5% hydrofluoric acid to remove a natural oxide film formed on the surface of the silicon substrate 2. The surface of the substrate 2 is thereby planarized further. The pretreatment is not always necessary. In step S2, the surface of the substrate 2 is rinsed with pure water. In Step S3, the substrate 2 is introduced into the chamber of a conventional sputtering apparatus, where film formation is performed.

In Example 2, an intermediate layer 3 is formed on the substrate 2 by sputtering. In the present Example, the intermediate layer 3 is made of platinum so that film formation is carried out using Pt (80 mmφ), which is an intermediate layer constituting material, as a first target at room temperature for 20 minutes under the conditions of an RF power of 100W, an Ar gas pressure of 0.9 Pa, and a distance of 60 mm between the substrate 2 and target (Step 3). As a result of this step, the intermediate layer 3 of about 100 nm thick is formed on the surface of the substrate 2. In the present Example, sputtering is employed for the formation of the intermediate layer 3. The film formation method is not limited thereto, but it may be CVD, vapor deposition, ion plating, plating or the like.

A surface layer 4 is then formed on the surface of the substrate 2 having the intermediate layer formed thereon. In the present Example, the surface layer 4 is formed by spin coating so that a solution of an organic titanium compound as a surface layer constituting material is applied to the surface of the substrate 2 having the intermediate layer 3 formed thereon. In the present Example, the surface layer 4 is made of titanium oxide so that an organic titanium compound obtained by the coordination of a functional group such as hydroxyl group, aldehyde group, alkyl group, carboxyl group or alkoxyl group to titanium having a coordination number of 4 is used. The titanium content (wt.%) in this organic titanium compound solution is desirably from about 0.5% to 5%. In the present Example, an organic titanium compound solution is used as the surface layer constituting material but the material is not limited thereto. Titanium-containing compounds from which substances other than titanium can be removed by firing, for example, titanium chloride, titanium bromide and titanium iodide may be used.

The surface layer constituting material is then added dropwise to the surface of the substrate 2 having the intermediate layer 3 formed thereon and a thin film is formed by spin coating. This spin coating in the present Example is conducted for 5 seconds at 1500 rpm and for 60 seconds at 3000 rpm, followed by drying at room temperature and at 220°C each for 10 minutes (Step 5). By this step, the surface layer 4 made of the titanium-containing surface-layer constituting material is formed on the surface of the intermediate layer 3 of the substrate 2.

In step S6, the substrate 2 having the intermediate layer 3 and surface layer 4 formed thereover is fired (annealed) in a muffle kiln at from 500°C to 800°C, preferably from 550°C to 650°C in an air atmosphere for 10 minutes, whereby the electrode 1 for electrolysis is obtained. By this, the surface layer constituting material applied to the surface of the intermediate layer 3 becomes titanium oxide uniformly. Titanium oxide is formed by this firing and in this state, the surface layer 4 has a thickness from about 20 nm to 100 nm. For the measurement of the thickness of the surface layer 4, a fluorescent X-ray analyzer ("JSX-3220ZS Element Analyzer", trade name; product of JEOL) is employed.

In the electrode 1 for electrolysis thus obtained, the surface layer 4 is composed alone of titanium oxide. The intermediate layer 3 forms platinum silicide with silicon of the substrate 2. Silicon remains in the intermediate layer 3 and does not penetrate into the surface layer 4. Similarly, platinum constituting the intermediate layer 3 does not reach the inside of the surface layer 4.

In the present Example, the surface layer 4 is composed only of a dielectric substance so that a using amount of a noble metal or an oxide thereof for the surface layer 4 can be decreased, leading to a cost reduction.

### (Example 2)

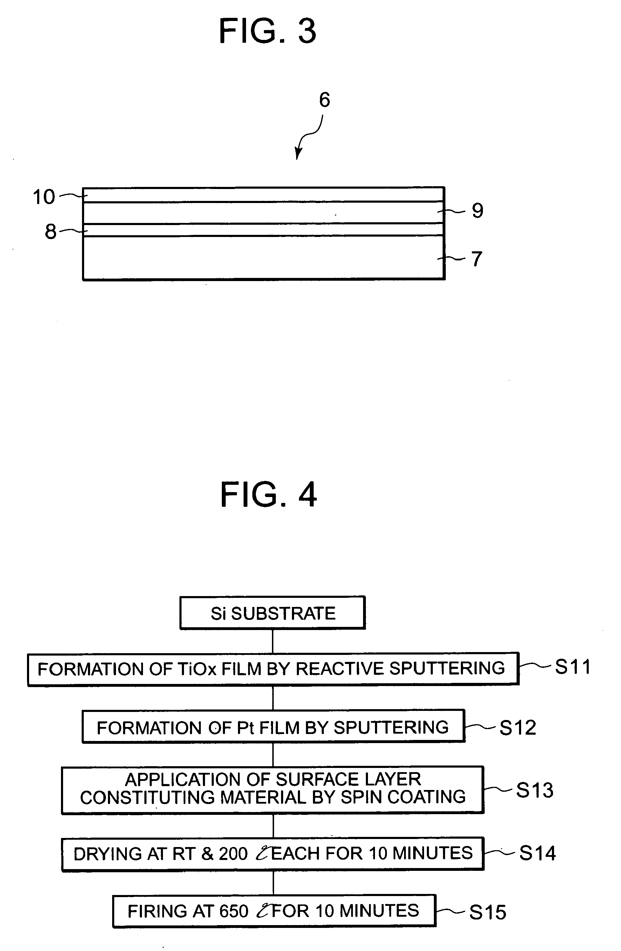

Referring to FIG. 3, a description will next be made of an electrode 6 for electrolysis according to Example 2. FIG. 3 is a cross-sectional plan view of the electrode 6 for electrolysis as one example of the electrode for electrolysis according to the present invention. As illustrated in FIG. 3, the electrode 6 for electrolysis is composed of a substrate 7, an adhesion layer 8 formed on the surface of the substrate 7, an intermediate layer 9 formed on the surface of the adhesion layer 8, and a surface layer 10 formed on the surface of the intermediate layer 9.

The substrate 7 in the present invention is made of a material similar to that constituting the substrate 2 used for the electrode 1 for electrolysis in Example 1 so that the substrate 7 in Example 2 is made of silicon.

The adhesion layer 8 is formed on the surface of the substrate 7 and serves to improve the adhesion between the substrate 7 and the intermediate layer 9 formed of, for example, platinum on the surface of the adhesion layer 8 and it is made of titanium oxide or titanium nitride. In the present Example, titanium oxide is employed.

The intermediate layer 9 is made of a material similar to that constituting the intermediate layer 3 used in the electrode 1 for electrolysis according to Example 1. In Example 2, the intermediate layer 9 is made of platinum.

In the present Example, when the substrate 7 is made of platinum, the surface of it is, needless to say, made of platinum. It is therefore not necessary to form the intermediate layer 9 particularly and is therefore not necessary to form the adhesion layer 8. Use of platinum for the formation of the substrate 7, however, leads to a substantial cost increase so that it is preferred to use an inexpensive material for the formation of the substrate 7 and then form the intermediate layer 9 composed of a noble metal or the like on the surface of the substrate 7 via the adhesion layer 8.

The surface layer 10 is formed in layers over the surface of the substrate 7 with the intermediate layer 9. It is made of a dielectric substance and covers the intermediate layer 9 therewith. The surface layer 10 has a predetermined thickness. In the present Example, it is greater than 0 but not greater than 1 mm, preferably not greater than 2000 nm. The thickness of the surface layer 10 in the present Example will be described specifically later, but the thickness of it is more preferably less than 100 nm.

As the dielectric substance constituting the surface layer 10, anatase type titanium oxide is employed.

The fabrication process of the electrode for electrolysis according to the present invention will next be described with reference to the flow chart of FIG. 4. Silicon is used as the substrate 7. In this case, silicon having a conductivity raised by the introduction thereinto of phosphorus (P) or boron (B) as an impurity is desired. Moreover, the silicon must have a very flat surface. In the present Example, silicon is used as the substrate 7. The material is however not limited thereto but a conductive material as described above and preferably having a planarized surface may be used.

Similar to Example 1, the silicon substrate 7 is therefore pre-treated with 5% hydrofluoric acid to remove a natural oxide film formed on the surface of the silicon substrate 7. The surface of the substrate 2 is thereby planarized further. The pretreatment is not always necessary. The surface of the substrate 7 is then rinsed with pure water. The substrate 7 is introduced into the chamber of a conventional sputtering apparatus, in which film formation is performed.

In the present Example, first, in Step S11, the adhesion layer 8 is formed in order to improve, as described above, the adhesion of the intermediate layer 9 to the surface of the substrate 7. The adhesion layer 8 is formed on the substrate 7 by reactive sputtering. The adhesion layer 8 is made of titanium oxide so that film formation using Ti as a first target is performed at room temperature for 10 minutes under the following conditions of input power of 6.1 W/cm², oxygen partial pressure (Ar:O₂=24:26) of 52% and film forming pressure of 0.6 Pa (Step S3). By this step, the adhesion layer 8 composed of titanium oxide and having a thickness of about 50 nm is formed on the surface of the substrate 7. In the present Example, reactive sputtering is employed for the formation of the adhesion layer 8. The film formation method is not limited thereto, but it may be sputtering, CVD, ion plating or plating or a combination thereof with thermal oxidation.

In Step S12, the intermediate layer 9 is formed on the surface of the substrate 7 having the adhesion layer 8 thereon. The intermediate layer 9 is formed over the substrate 7 by sputtering as in Example 1. In the present Example, the intermediate layer 9 is made of platinum so that film formation is carried out using Pt (80 mmφ) as a first target at room temperature for about 1 minute and 10 seconds under the conditions of an input power of 4.63 W/cm², an Ar gas pressure of 0.7 Pa. As a result of this step, the intermediate layer 9 of about 200 nm thick is formed over the substrate 7 having thereon the adhesion layer 8. In the present Example, sputtering is employed for the formation of the intermediate layer 9. The film formation method is not limited thereto, but it may be CVD, vapor deposition, ion plating, plating or the like.

The surface layer 10 is then formed over the substrate 7 having the intermediate layer 9 formed thereon. In the present Example, the surface layer 10 is formed by spin coating so that a solution of an organic titanium compound as a surface layer constituting material is applied to the surface of the substrate 2 having the intermediate layer 9 formed thereon. In the present Example, the surface layer 10 is made of titanium oxide so that an organic titanium compound obtained by the coordination of a functional group such as hydroxyl group, aldehyde group, alkyl group, carboxyl group or alkoxyl group to titanium having a coordination number of 4 is used. The titanium content (wt.%) in this organic titanium compound solution is desirably from about 0.5% to 5%. In the present Example, an organic titanium compound solution is used as the surface layer constituting material but the material is not limited thereto. Titanium-containing compounds from which substances other than titanium can be removed by firing, for example, titanium chloride, titanium bromide and titanium iodide may be used.

In Step S13, the surface layer constituting material is added dropwise to the surface of the substrate 7 having the intermediate layer 3 formed thereon and a thin film is formed by spin coating. This spin coating in the present Example is conducted at 1000 rpm for 10 seconds and at 3000 rpm for 30 seconds, followed by drying at room temperature and at 200°C for each 10 minutes (Step S14). By this step, the surface layer 10 is formed of the titanium-compound-containing surface-layer constituting material on the surface of the intermediate layer 9 of the substrate 7.

In step S15, the substrate 7 having the intermediate layer 9 and surface layer 10 thereover is fired (annealed) in a muffle kiln at from 500°C to 800°C, preferably from 550°C to 650°C, at 650°C in the present Example, in ambient atmosphere for 10 minutes, whereby the electrode 6 for electrolysis is obtained. By this, the surface layer constituting material applied to the surface of the intermediate layer 9 becomes titanium oxide uniformly. In the present Example, the above-described film forming operation was repeated 14 times in total. The surface layer constituting material becomes titanium oxide by the firing. The thickness of the surface layer 10 in this state is from about 20 nm and 1000 nm. It is about 500 nm in the present Example. For the measurement of the thickness of the surface layer 10, a fluorescent X-ray analyzer ("JSX-3220ZS Element Analyzer", trade name; product of JEOL) is employed.

In the electrode 6 for electrolysis obtained in the above-described manner, the surface layer 10 is composed only of titanium oxide. Described specifically, the surface layer constituting material is a titanium-containing compound, for example, as described above, an organic titanium compound having, in addition to titanium, a plurality of functional groups coordinated therein, titanium chloride, titanium bromide or titanium iodide but substances other than titanium such as functional groups composed of an organic substance, chlorine, bromine and iodine are removed when the material is fired. Titanium, on the other hand, reacts with oxygen in the atmosphere into titanium oxide.

Titanium oxide typically exists in three different crystalline forms, that is, anatase, rutile and brookite. Thermodynamically, the rutile type titanium oxide is a stable phase in any temperature region, and the other types are metastable phases. Brookite type titanium oxide is unstable compared with another crystalline form. Owing to difficulty in synthesizing pure crystals of it, industrial use of it is not common. Anatase type titanium oxide is known to thermally transfer into rutile type one at high temperatures, for example, 900°C or greater.

For the analysis of crystal structures of these anatase, rutile and brookite type titanium oxides, X-ray diffraction (XRD) is typically employed. This method enables analysis of the crystal structure of titanium oxide constituting the surface layer 10.

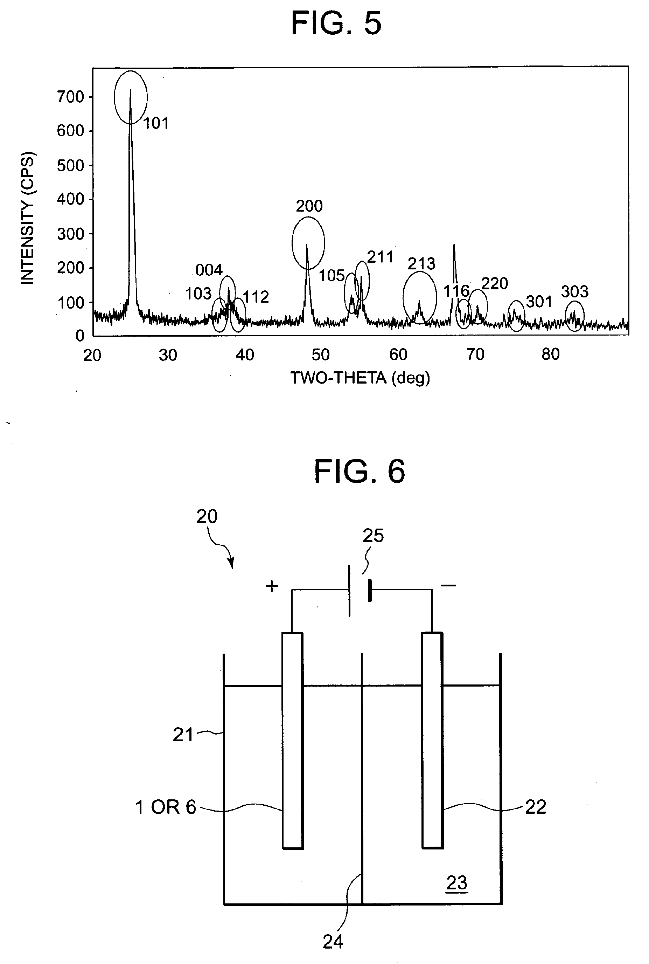

FIG. 5 is an X-ray diffraction pattern of the surface layer 10 of the electrode 6 for electrolysis thus obtained. In this pattern, titanium oxide that constitutes the surface layer 10 of the electrode 6 for electrolysis obtained in the present Example shows peaks specific to an anatase type crystal structure (encircled are peaks specific to the anatase crystal structure and the numeral appended to each peak is a plane index). This has revealed that the titanium oxide film constituting the surface layer 10 has an anatase type crystal structure.

In the present Example, the surface layer constituting material containing a titanium compound is applied to the surface of the substrate (the surface of the intermediate layer 9 in the present Example) by spin coating, followed by firing at a predetermined temperature, whereby the surface layer 10 made of anatase type titanium oxide can be obtained. A method of forming the surface layer 10 from the anatase type titanium oxide is however not limited to this.

Another formation method of the surface layer 10 is thermal CVD. In this thermal CVD, after successive formation of the adhesion layer 8 and intermediate layer 8 on the surface of the substrate 7 as in Example 1, an organic titanium compound which is a surface layer constituting material is evaporated and introduced into a reaction tube with an aid of a proper carrier gas. Chemical reaction is then effected on the surface of the substrate 7 heated to a high temperature, for example, from 500°C to 800°C, preferably from 500°C to 600°C.

By this heat treatment, substances other than titanium of the organic titanium compound, which is the surface layer constituting material, for example, organic substances are removed on the surface of the substrate 7 heated to high temperature and only titanium reacts with oxygen in the atmosphere to form titanium oxide on the surface of the substrate 7. Titanium oxide formed on the surface of the substrate 7 (strictly, the surface of the intermediate layer 9) constitutes a thin film (titanium oxide film) having an anatase crystal structure.

The surface layer 10 made of anatase type titanium oxide can also be formed, for example, by a dip method.

In any formation method of the surface layer 10, titanium oxide having an anatase crystal structure is not formed uniformly in the titanium oxide film formed on the surface of the intermediate layer 9. During formation of crystals on the surface of the high temperature substrate 7 by firing or thermal CVD, titanium oxide aggregates into crystal grains and pores like interstices are formed between crystal grains. These pores are dotted in the surface layer 10 of the electrode 6 for electrolysis and from the pores, a layer just under the surface layer 10, that is, the intermediate layer 9 made of platinum is exposed.

In the present Example, the adhesion layer 8 made of titanium oxide is formed on the surface of the substrate 7 made of silicon so that it becomes possible to stop the formation of platinum silicide due to direct diffusion of platinum constituting the intermediate layer 9 into the substrate 7. In addition, by the adhesion layer 8 made of titanium oxide, adhesion of platinum constituting the intermediate layer 9 to the substrate 7 can be improved. In addition, it becomes possible to constitute the intermediate layer 9, which is to be formed on the surface of the substrate 7, uniformly at an atomic level. This facilitates the formation of the surface layer 10 on the surface of the intermediate layer 9, that is, formation of titanium oxide having an anatase crystal structure.

In the present Example, the surface layer 10 is composed only of a dielectric substance so that it is possible to decrease the using amount of a noble metal or novel metal oxide for the surface layer 10 and thereby reducing the cost.

### (Example 3)

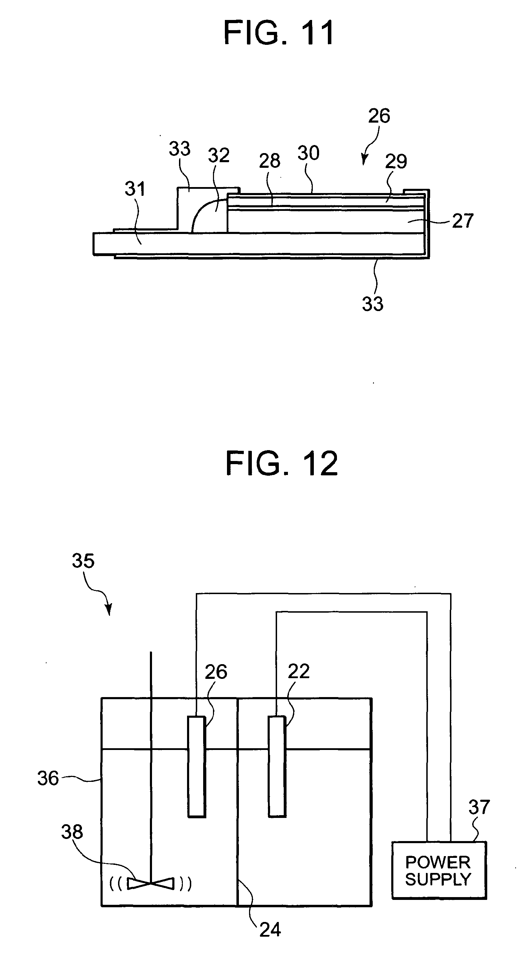

Electrode 26 for electrolysis in Example 3 will next be described with reference to FIG. 11. FIG. 11 is a cross-sectional plan view of the electrode 26 for electrolysis as one example of the electrode for electrolysis according to the present invention. As illustrated in FIG. 11, the electrode 26 for electrolysis has a substrate 27, an adhesion layer 28 formed on the surface of the substrate 27, an intermediate layer 29 formed on the surface of the adhesion layer 28, and a surface layer 30 formed on the surface of the intermediate layer 29. This electrode 26 for electrolysis is equipped, on the side of the substrate 27, with a titanium plate 31 as an electroconducting portion. The titanium plate 31 and the intermediate layer 29 are made conductive via a silver paste 32 serving as a conductive material disposed on the end face of the electrode 26. The silver paste 32 and titanium plate 31 are covered with a sealing material 33 and do not contribute to electrolysis.

In the present Example, the substrate 27 is made of a material similar to that employed for the substrate 2 or 7 used for the electrode 1 or 6 for electrolysis in the above-described Examples so that the substrate 27 is also made of silicon in the present Example.

The adhesion layer 28 is formed on the surface of the substrate 27 and serves to improve the adhesion between the substrate 27 and the intermediate layer 29 formed of, for example, platinum on the surface of the adhesion layer 28. The adhesion layer is made of titanium oxide, titanium nitride or the like. In the present Example, titanium oxide is employed.

The intermediate layer 29 is made of a material similar to that used for the intermediate layer 3 or 9 of the electrode 1 or 6 for electrolysis obtained in the above Example. In the present Example, the intermediate layer 29 is comprised of platinum.

Also in the present Example, when the substrate 27 is made of platinum, the surface of the substrate 27 is, needless to say, made of platinum. It is therefore not necessary to form the intermediate layer 29 particularly and needless to say, not necessary to form the adhesion layer 28. The formation of the substrate 27 using platinum causes a rise in cost so that from the industrial viewpoint, it is preferred to employ an inexpensive material for the substrate 27 and form the intermediate layer 29 made of a noble metal or the like on the surface of the substrate 27 via the adhesion layer 28.

The surface layer 30 is formed in layers over the surface of the substrate 27 with the intermediate layer 29. It is made of a dielectric substance and covers the intermediate layer 29 therewith. The surface layer 30 has a predetermined thickness. In the present Example, it is greater than 0 but not greater than 1 mm, preferably from 200 nm to 600 nm.

As the dielectric substance constituting the surface layer 30, anatase type titanium oxide is used as in the above-described Examples.

A fabrication process of the electrode 26 for electrolysis in the present Example is substantially similar to that of the electrode 6 for electrolysis in Example 2 (firing temperature: 650°C) so that description on it is omitted. With regards to the surface layer 30 constituting the electrode 26 for electrolysis, however, as a result of repetition of the above-described film forming operation, the surface layer 30 has a thickness of from about 200 nm to 600 nm. For the measurement of the thickness of the surface layer 30, fluorescent X-ray analyzer ("JSX-3220ZS Element Analyzer", trade name; product of JEOL) is employed.

In the electrode 26 for electrolysis available by the above-described manner, the surface layer 30 is composed only of titanium oxide. Described specifically, the surface layer constituting material is a titanium-containing compound, for example, as described above, an organic titanium compound having, in addition to titanium, a plurality of functional groups coordinated thereto, titanium chloride, titanium bromide or titanium iodide but substances other than titanium such as functional groups composed of an organic substance, chlorine, bromine and iodine are removed when the material is fired. Titanium, on the other hand, reacts with oxygen in the atmosphere into titanium oxide.

Also in this case, titanium oxide constituting the surface layer 30 has an anatase type crystal structure.

Also in this case, a surface layer constituting material containing a titanium compound is applied to the surface of the substrate (the surface of the intermediate layer 29 in the present Example) by spin coating, followed by firing at a predetermined temperature to obtain the surface layer 30 made of anatase type titanium oxide. A method of forming the surface layer 30 from the anatase type titanium oxide is however not limited to this.

As described above, the surface layer 30 may also be formed by thermal CVD method, dip method, plating method or the like.

### (Electrolytic process using each electrode for electrolysis; and evaluation thereof)

With reference to FIGS. 6 to 10, and FIGS. 12 to 14, a description will next be made of the production of ozone and/or hydrogen peroxide by electrolysis using the electrode 1, 6 or 27 for electrolysis fabricated in the above-described Examples.

First, tests on the electrodes 1 and 5 for electrolysis by using an electrolytic apparatus 20 as illustrated in FIG. 6 will be described. FIG. 6 is a schematic view of the electrolytic apparatus 20. The electrolytic apparatus 20 has a treatment tank 21, the above-described electrode 1 or 6 for electrolysis as an anode, an electrode 22 as a cathode, and a power supply 25 for applying a direct current to these electrodes 1 (6) and 22. The apparatus is equipped further with a cation exchange membrane (diaphragm: "Nafion", trade name; product of Dupont) for partitioning the treatment tank 21 into a region having the electrode 1 (6) and the other region having the electrode 22. In this treatment tank 21, simulated tap water 23 or 0.01M HClO₄ is retained as an electrolyte solution. In the present Example, an electrolyte solution such as simulated tap water or 0.01M HClO₄ is used in the Test. Owing to the cation exchange membrane installed in the apparatus, however, a substantially similar effect is available even if pure water is used for the treatment.

The electrode 1 or 6 for electrolysis used in the test is fabricated in accordance with the fabrication process employed in the above Examples. As the electrode 1 for electrolysis used in the electrolytic apparatus 20, three electrodes are fabricated in total. They have surface layers 4 formed by firing at 550°C, 600°C and 650°C, respectively. The surface layer 10 of the electrode 6 for electrolysis is, on the other hand, formed at a firing temperature of 650°C. The electrodes 1 and 6 for electrolysis are evaluated by measuring ultraviolet absorption of the electrolyte solution when the electrodes 1 and 6 for electrolysis are used as an anode.

On the other hand, platinum is used for the electrode 22 as a cathode. An insoluble electrode obtained by firing platinum on the surface of the titanium substrate 2, a platinum-iridium electrode for electrolysis, or a carbon electrode may also be used for the electrode as a cathode.

The electrolyte solution to be subjected to electrolytic treatment using the electrode 1 for electrolysis is an aqueous solution obtained by simulating tap water and this simulated tap water 23 is composed of 5.75 ppm of Na⁺, 10.02 ppm of Ca²⁺, 6.08 ppm of Mg²⁺, 0.98 ppm of K⁺, 17.75 ppm of Cl⁻, 24.5 ppm of SO₄²⁻ and 16.5 ppm of CO₃²⁻. The electrolyte solution to be subjected to electrolytic treatment using the electrode 6 for electrolysis is 0.01M HClO₄.

According to the above-described constitution, in the electrolysis using the electrode 1 for electrolysis, 150 ml of simulated tap water 23 is retained in the treatment tank 21, and the electrode 1 for electrolysis and electrode 22 are immersed in the simulated tap water. An area of each of the electrode 1 for electrolysis and the electrode 22 in the present Example is set at 25 mm × 15 mm. By the power supply 25, a constant current of 80 mA with a current density of about 20 mA/cm², a constant current of 160 mA with a current density of about 40 mA/cm², a constant current of 240 mA with a current density of about 60 mA/cm² are each applied to the electrode 1 for electrolysis and the electrode 22. On the other hand, in the electrolysis using the electrode 6 for electrolysis, 0.01M HClO4 is retained in the treatment tank 21 and the electrode 6 for electrolysis and electrode 22 are immersed in the solution. Electrolysis is conducted under the conditions of a current density of 26.7 mA/cm² and temperature of the solution of +15°C.

It is to be noted that in the present Example, the production amounts of ozone and hydrogen peroxide by the electrode 1 or 6 for electrolysis are determined and evaluated by measuring ultraviolet absorption of the simulated tap water 23 or solution five minutes after electrolysis under the above-described conditions.

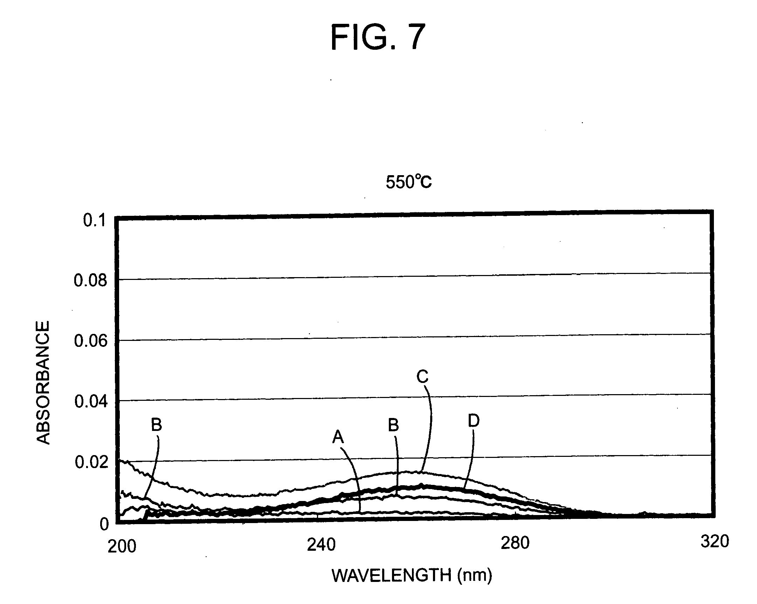

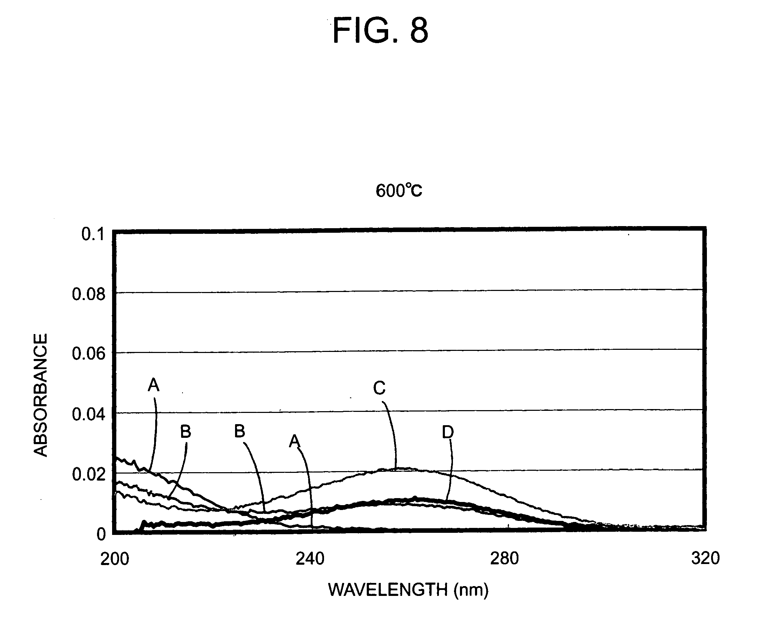

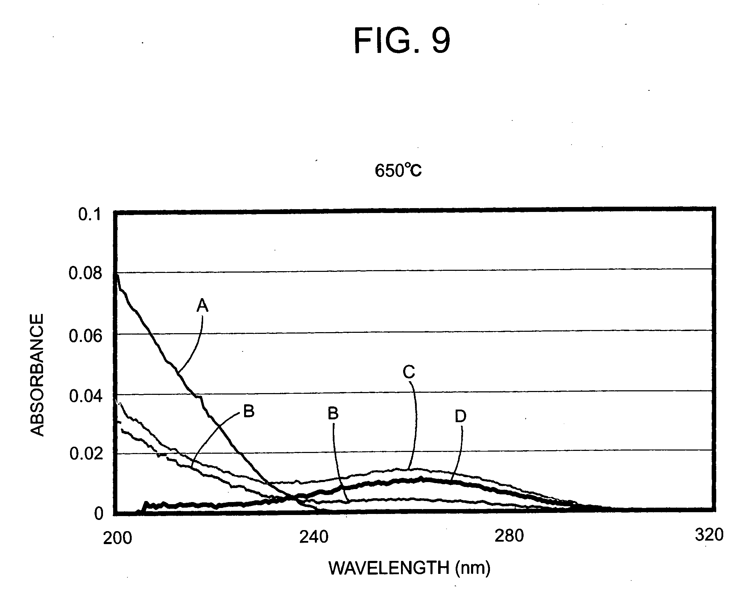

Next, referring to FIGS. 7 to 9, a description will be made of substances produced using electrodes 1 for electrolysis obtained at respective firing temperatures at each current density. FIG. 7 shows ultraviolet absorption of the electrode 1 for electrolysis obtained at a firing temperature of 550°C at each current density; FIG. 8 shows ultraviolet absorption of the electrode 1 for electrolysis obtained at a firing temperature of 600°C at each current density; and FIG. 9 shows ultraviolet absorption of the electrode 1 for electrolysis obtained at a firing temperature of 650°C at each current density. In any diagram, the ordinate indicates absorbance and the abscissa indicates wavelength. In these diagrams, A, B and C are test results at a current density of about 20 mA/cm², about 40 mA/cm² and about 60 mA/cm², respectively, while D are test results of an electrode for electrolysis indicated as control. The electrode for electrolysis used in D is obtained by forming titanium on the surface of the substrate or on the surface of the intermediate layer by sputtering, and then thermally oxidizing it into the surface layer 4. The electrode area of it is 15 mm × 15 mm, firing temperature is 500°C and current density is 10 mA/cm².

FIG. 7 shows the test results of the electrode 1 for electrolysis obtained by firing at 550°C. According to them, an absorption peak (from about 200 nm to 220 nm) of hydrogen peroxide and an absorption peak (about 258 nm) of ozone are observed at any current density and their absorbances are almost equal or that of ozone is a little greater than that of hydrogen peroxide. The results show that absorbances of hydrogen peroxide and ozone increase with a rise in current density and that they are large particularly at a current density of 60 mA/cm².

When the electrode 1 for electrolysis having a surface layer 4 formed by sputtering is used, on the other hand, an absorption peak of ozone is observed but no absorption peak of hydrogen peroxide is found. This suggests that it is impossible to produce both ozone and hydrogen peroxide by the method of forming the surface layer 4 by sputtering under the above-described conditions, while it is possible to produce both ozone and hydrogen peroxide by the method of forming the surface layer 4 by spin coating.

FIG. 8 shows test results of the electrode 1 for electrolysis obtained by firing at 600°C. According to these results, an absorption peak (from about 200 nm to 220 nm) of hydrogen peroxide is observed at any current density, but an absorption peak (about 258 nm) of ozone is observed only at a current density of 40 mA/cm² and 60 mA/cm² and no absorption peak of ozone is found at a current density of 20 mA/cm². In particular, an absorption peak of hydrogen peroxide at a current density of about 20 mA/cm² is higher than that at current densities of about 40 and 60 mA/cm². This means that hydrogen peroxide is produced preferentially to ozone.

Owing to such preferential production, it becomes possible to select a ratio of hydrogen peroxide to ozone produced by electrolysis, particularly, production or non-production of ozone by changing a current density. By carrying out electrolysis at a current density changed depending on a desired substance, a substance produced preferentially can be selected, leading to improvement in versatility.

When an electrolyte solution is electrolyzed using the electrode 1 for electrolysis obtained by firing at 600°C, an absorption peak of ozone becomes higher and an absorption peak of hydrogen peroxide becomes lower at a current density of 60 mA/cm², compared with the absorption peaks of ozone produced by the electrode 1 for electrolysis obtained by firing at 550°C as illustrated in FIG. 7. An absorption peak of hydrogen peroxide at a current density of 40 mA/cm², on the other hand, becomes higher.

FIG. 9 shows test results of the electrode 1 for electrolysis annealed at 650°C. According to these results, an absorption peak (from about 200 nm to 220 nm) of hydrogen peroxide is observed at any current density, but an absorption peak (about 258 nm) of ozone is observed only at current densities of about 40 mA/cm² and about 60 mA/cm² and no absorption peak of ozone is found at a current density of about 20 mA/cm². In particular, an absorption peak of hydrogen peroxide at a current density of about 20 mA/cm² is higher than those at current densities of about 40 and about 60 mA/cm². This means that hydrogen peroxide is produced preferentially to ozone.

Owing to such preferential production, it becomes possible to select a ratio of hydrogen peroxide to ozone produced by electrolysis, particularly, production or non-production of ozone by changing a current density. In particular, with an increase in the current density to about 20 mA/cm², the production amount of hydrogen peroxide can be raised and at the same time, the production amount of ozone can be reduced. In addition, by adjusting the current density to about 20 mA/cm², it is possible to inhibit the production of ozone and produce only hydrogen oxide. By carrying out electrolysis at a current density changed depending on a desired substance, a substance produced preferentially can be selected, leading to improvement in versatility.

The absorption peak of ozone is observed at each of about 40 mA/cm² and about 60 mA/cm², but the absorption amount is smaller compared with that in the case of electrolysis using the electrode obtained by firing at 600°C. Anyway, hydrogen peroxide is produced preferentially to ozone at any current density. It can be understood that this tendency is more pronounced than in the case of FIG. 8 where the electrode 1 obtained by firing at 600°C is used.

Accordingly, with an increase in the firing temperature of the electrode 1 for electrolysis, hydrogen peroxide is produced more preferentially. When the firing temperature is 600°C, it is possible to produce ozone efficiently while producing hydrogen peroxide.

When both ozone and hydrogen peroxide are produced, hydrogen peroxide generated in the electrolyte solution is oxidized with ozone having a higher oxidizing power into OH radicals (chemical reaction formula A). The following is the chemical reaction formula A:

Chemical reaction formula A: 2O₃ + H₂O₂ → 2·OH + 3O₂

The OH radicals can exhibit a strong oxidizing power. By the use of the electrode 1 for electrolysis to electrolyze an electrolyte solution, a plurality of oxidizing substances can be produced and OH radicals produced in accordance with these reactions contribute to elimination of smells of mold and smoke, which cannot be eliminated easily only by the power of ozone. In this case, OH radicals have a relatively short life, but can be produced easily at a site where it is required. The oxidizing power of the OH radicals can therefore be utilized effectively.

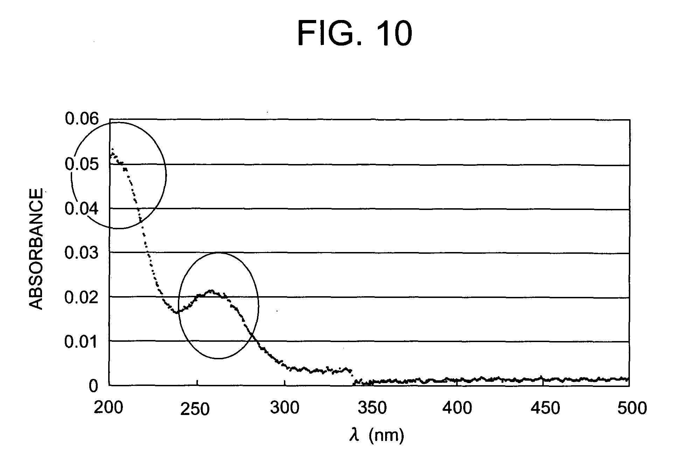

Next, a substance produced by the electrolysis using the electrode 6 for electrolysis will be described with reference to FIG. 10. FIG. 10 shows the ultraviolet absorption of an electrolyte solution electrolyzed using the electrode 6 for electrolysis. The ordinate represents absorbance, while the abscissa represents wavelength. According to this, an absorption peak (from about 200 nm to 220 nm) of hydrogen peroxide and an absorption peak (about 258 nm) of ozone are observed. An absorbance ratio of hydrogen peroxide to ozone is about 2 but anyway, both hydrogen peroxide and ozone are produced in the electrolyte solution. Test results shown in FIG. 10 are different in production or non-production of ozone from the test data, shown in FIG. 9, of the electrode 1 for electrolysis, which has been fabricated by spin coating, at a current density of about 20 mA/cm². This difference is presumed to occur because the current density of FIG. 10 is 26.7 mA/cm², the electrode 6 for electrolylsis has the adhesion layer 8 between the intermediate layer 9 and substrate 7, and the electrolyte solution employed for electrolysis is different.

Thus, both ozone and hydrogen peroxide can be produced in the electrolyte solution by electrolyzing an electrolyte solution by using the electrode 1 or 6 for electrolysis obtained in the above-described Example as an anode. Both of them can be produced, because, in the electrode 1 or 6 for electrolysis obtained in the above-described Example, titanium oxide constituting the surface layer 4 or 10 can be formed by spin coating as a relatively thin film having a thickness not greater than 100 nm and in addition, titanium oxide constituting the thin film has, as is apparent from FIG. 5, an anatase type crystal structure.

Electrons are therefore presumed to transfer via an impurity level in the surface layer 4 or 10, or by the Fowler-Nordheim tunneling to the intermediate layer 3 comprised of a conductive material.

When a metal electrode is used as an electrode for electrolysis, an empty level just above the Fermi level typically receives electrons from the electrolyte and an electrode reaction at an anode occurs. When the electrode 1 or 6 for electrolysis having the surface layer 4 or 10 according to the present invention is used, on the other hand, owing to the surface layer made of a dielectric substance, an empty level near the bottom of a conductor which is on an energy level higher by about half of a band gap than the Fermi level receives electrons from the electrolyte, whereby the electrode reaction at an anode occurs.

Use of the electrode 1 or 6 for electrolysis according to the present invention is therefore presumed to induce an increase in the production efficiency because compared with the use of an electrode for electrolysis made of platinum or the like, it causes transfer of electrons at a higher energy level and triggers an electrode reacation.

By applying an electric current to the electrode 1 for electrolysis at a predetermined low current density, that is, from 0.1 mA/cm² to 200 mA/cm², preferably from 1 mA/cm² to 1000 mA/cm², the electrode thus obtained can therefore produce ozone at a high efficiency and at the same time, produce hydrogen peroxide.

In particular, the surface layer 10 of the electrode 6 for electrolysis is, as described in Example 2, formed on the surface (the surface of the intermediate layer 9 in the present Example) of the substrate 7 by spin coating or thermal CVD of a titanium-containing compound as a surface layer constituting material so that the surface layer 10 is a thin film made of anatase type titanium oxide. Aggregation of titanium oxide occurs at the time of reaction on the surface of the substrate heated to high temperature by firing or thermal CVD, whereby a plurality of pores which expose the surface of the substrate 7 (strictly, the surface of the intermediate layer 9 just below the surface layer 10, that is, the conductive intermediate layer 9 constituting the contact surface between the substrate 2 and the surface layer 10) between crystals are formed.

In the surface layer 10, a reaction for producing ozone as described above proceeds on the surface of the titanium oxide thin film and at the same time, a reaction for producing hydrogen peroxide proceeds owing to the presence of pores from which the intermediate layer 9 is exposed.

This makes it possible to produce ozone efficiently even by the electrolysis at a low current density and in addition, to produce hydrogen peroxide without suppressing the production efficiency of ozone.

The surface layer 4 or 10 of the electrode 1 or 6 capable of producing both ozone and hydrogen peroxide can be formed by spin coating as described above. This enables fabrication of electrodes for electrolysis at a relatively low cost, leading to cost reduction of the corresponding equipment. The surface layer 4 or 10 is, when it is formed by thermal CVD as described above, able to have good stability and therefore contributes to high production efficiency.

Moreover, the surface constituting material to be used for forming such surface layer 4 or 10 has a titanium content of from 0.5 to 5 wt.%. This facilitates formation of an anatase type crystal structure and at the same time enables the formation of pores large enough to realize the production of hydrogen peroxide without suppressing the production efficiency of ozone when the electrode 1 or 6 is used as an anode.

In Examples 1 and 2, as described above, the electrode 1 or 6 for electrolysis is fabricated by forming the intermediate layer 3 or 9 containing at least one of metals which are difficult to oxidize, metal oxides having conductivity, or metals having conductivity even if they are oxidized and then forming the surface layer 4 or 10 as described above on the surface of the intermediate layer 3 or 9. When the substrate 2 or 7 and the intermediate layer 3 or 9 are made of the same material, that is, a material containing at least one of metals which are difficult to oxidize, metal oxides having conductivity, or metals having conductivity even if they are oxidized, an electrode capable of efficiently producing ozone can be fabricated even without disposing the intermediate layer 3 particularly. By forming, as in the present invention, the intermediate layer 3 or 9 made of the above-described material while covering the substrate 2 or 7 therewith, however, it is possible to fabricate the electrode 1 or 6 capable of efficiently producing ozone at a low production cost.

Test on the electrode 26 for electrolysis, which has been obtained in Example 3, by using an electrolytic apparatus 35 as illustrated in FIG. 12 will next be described. FIG. 12 is a schematic view of the electrolytic apparatus 35. The electrolytic apparatus 35 has a treatment tank 36, the electrode 26 for electrolysis as an anode, an electrode 22 as a cathode and a power supply 37 for applying a direct current to these electrodes 26 and 22. The apparatus is equipped further with a cation exchange membrane (diaphragm: "Nafion", trade name; product of Dupont) 24 for partitioning the treatment tank 36 into a region having the electrode 26 and the other region having the electrode 22. It has an agitator 38 in the region where the electrode 26 for electrolysis is immersed as an anode.

In this treatment tank 36, simulated tap water 23 or 0.01M HClO₄ is retained as an electrolyte solution. In the present Example, an electrolyte solution such as simulated tap water or 0.01M HClO₄ is used in the test. Owing to the cation exchange membrane installed in the apparatus, however, a substantially similar effect is available even if pure water is treated. The simulated tap water employed in this Test has a composition equal to that used in the above-described Test.

The electrode 26 for electrolysis used in the test is that obtained by the fabrication process as described in Example 3. For the electrode 22 as a cathode, a material similar to that employed in the above test, that is, platinum is used. An insoluble electrode obtained by firing platinum on the surface of the titanium substrate 2, a platinum-iridium electrode for electrolysis, or a carbon electrode may also be used for the electrode as a cathode.

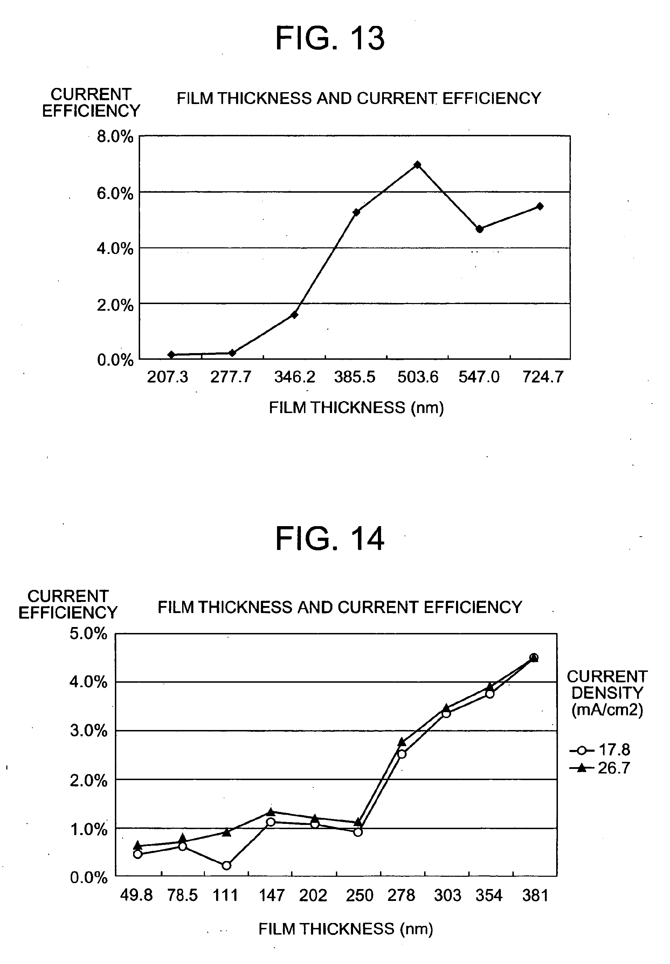

A test on current efficiency for ozone production when electrolysis is carried out using the electrode 26 for electrolysis in the above-described constitution will next be described with reference to FIGS. 13 and 14. In the Test as shown in FIG. 13, 150 ml of 0.01M HClO₄ is retained in both regions (respective regions on the anode side and cathode side) in the treatment tank 36 and the electrode 26 for electrolysis and electrode 22 are immersed therein respectively. The distance between these electrodes is set at 10 mm and a constant current with a current density of 26.7 mA/cm² is applied to the electrode 26 for electrolysis and electrode 22 from a power supply 37. The temperature of the solution is set at +15°C.

The electrode 26 for electrolysis in the present Example is evaluated by measuring the production amount of ozone in the solution after electrolysis for 5 minutes under the above-described conditions by an indigo method (product of HACH) and then, calculating a ratio of charge contributing to ozone production relative to the total charge applied to the electrode, that is, current efficiency based on the following chemical reaction formula B:

Chemical reaction formula B: 3H₂O → O₃ + 6H⁺ + 6e⁻

In the Test in FIG. 13, seven electrodes 26 for electrolysis are fabricated while adjusting the thickness of their surface layer 30 to 207.3 nm, 277.7 nm, 346.2 nm, 385.5 nm, 503.6 nm, 547.0 nm and 724.7 nm, respectively. The amount of a current contributing to ozone production in the electrolyte solution is measured and an ozone production efficiency of these electrodes as a function of the thickness of the surface layer 30 is compared based on a ratio of charge contributing to ozone production relative to total charge applied to the electrode, that is, current efficiency. For the measurement of the thickness of the surface layer 30, a fluorescent X-ray analyzer ("JSX-3220ZS Element Analyzer", trade name; product of JEOL) is employed.

When stable perchloric acid (HClO₄ is used as an electrolyte solution, most of the current to be supplied to the electrode usually contributes to the production of oxygen so that ozone production hardly occurs. In Test as shown in FIG. 13, when the thickness of the surface layer 30 of the electrode 26 for electrolysis is 207.3 nm or 277.7 nm, a current efficiency for ozone production becomes almost 0% and most of the current to be supplied to electrolysis is consumed for the production of oxygen.

When the thickness of the surface layer 30 of the electrode 26 for electrolysis is 346.2 nm, on the other hand, the current efficiency for ozone production becomes about 1.7%. This suggests that even in the electrolysis of stable perchloric acid as an electrolyte solution, ozone is produced. The film thickness becomes greater, for example, 385.5 nm, 503.6 nm, 547.0 nm or 724.7 nm, ozone can be produced at a current efficiency as high as about 5.2%, about 6.9%, about 4.7% and about 5.4%, respectively. Also in this case, most of the current which has remained after supply to electrolysis is used for the production of oxygen. This will equally apply hereinafter.

In Test shown in FIG. 14, on the other hand, 150 ml of simulated tap water is retained in both regions (respective regions on the anode side and cathode side) in the treatment tank 36 and the electrode 26 for electrolysis and electrode 22 are immersed therein respectively. The distance between these electrodes is set at 10 mm and a constant current with a current density of 26.7 mA/cm² or a constant current with a current density of 17.8 mA/cm² is applied to the electrode 26 for electrolysis and electrode 22 from a power supply 37. The temperature of the solution is set at +15°C.

In this test, the electrode 26 for electrolysis is evaluated by measuring the production amount of ozone in the solution after electrolysis for 5 minutes under the above-described conditions by an indigo method (product of HACH) and calculating a ratio of charge contributing to the production of ozone relative to the total charge applied, that is, current efficiency based on the following chemical reaction formula B:

Chemical reaction formula B: 3H₂O → O₃ + 6H⁺ + 6e⁻

In the Test in FIG. 14, ten electrodes 26 for electrolysis are fabricated while adjusting the thickness of their surface layer 30 to 49.8 nm, 78.5 nm, 111 nm, 147 nm, 202 nm, 250 nm, 278 nm, 303 nm, 354 nm and 381 nm, respectively. The amount of a current contributing to ozone production in the electrolyte solution is measured and an ozone production efficiency of these electrodes as a function of the thickness of the surface layer 30 is compared based on a ratio of charge contributing to ozone production relative to total charge applied, that is, current efficiency.

Under any current density conditions, a current efficiency for ozone production is about 1.3% or less when the surface layer 30 of the electrode 26 for electrolysis has a thickness not greater than 250 nm.

When the surface layer 30 of the electrode 26 for electrolysis is adjusted to 278 nm thick, on the other hand, a current efficiency for ozone production is about 2.5% (17.8 mA/cm²) or about 2.8% (26.7 mA/cm²), suggesting a marked increase in the ozone production efficiency. When the thickness of the surface layer 30 is increased further, a current efficiency for ozone production rises with an increase in the film thickness.

Test results in FIGS. 13 and 14 show that a production efficiency of ozone shows a marked increase when the thickness of the surface layer 30 constituting the electrode 26 for electrolysis exceeds a certain level. The thickness of the surface layer at which the current efficiency for ozone production undergoes a change differs depending on the kind of the electrolyte solution to be electrolyzed. If the thickness of the surface layer 30 is 200 nm or greater, it is possible to observe the thickness at which the current efficiency for ozone production changes.

Adjustment of the thickness of the surface layer 30 to 200 nm or greater therefore makes it possible to produce ozone without lowering "a ratio of charging contributing to ozone production to the total charge" is (that is) "a current efficiency".

Based on the test results as shown in FIG. 13, when the surface layer 30 of the electrode 26 for electrolysis has a certain thickness, an increase in current efficiency for ozone production cannot be observed. In view of the film forming operation of the surface layer 30 of the electrode 26 for electrolysis, it is therefore possible to obtain an electrode having a high ozone production efficiency while improving the productivity of the electrode 26 for electrolysis and reducing the production cost of it by adjusting the thickness of the surface layer 30 to 600 nm or less.

This makes it possible to fabricate an electrode for electrolysis having a higher ozone production efficiency at a low cost.

## Claims

1. An electrode for electrolysis comprising a substrate and a surface layer formed on the surface thereof, wherein the surface layer is anatase type titanium oxide.

2. An electrode for electrolysis according to Claim 1, wherein the surface layer has a thickness not greater than 1 mm.

3. An electrode for electrolysis according to Claim 1 or 2, wherein the surface layer has a thickness from 200 nm to 600 nm.

4. An electrode for electrolysis according to any one of Claims 1 to 3, wherein the substrate is conductive at at least a contact surface thereof with the surface layer.

5. An electrolytic process, which comprises electrolyzing water or an electrolyte solution at a current density from 0.1 mA/cm² to 2000 mA/cm² while using an electrode for electrolysis as claimed in any one of Claims 1 to 4 as an anode.

6. An electrolytic process according to Claim 5, wherein the substance produced by the electrolytic process is at least one of ozone, hydrogen peroxide and another active oxygen species.

7. An electrolytic apparatus, which comprises an electrode for electrolysis as claimed in any one of Claims 1 to 4 and electrolyzes water or an electrolyte solution by using the electrode in accordance with an electrolytic process as claimed in Claim 5 or 6.
